# EUROPEAN PATENT SPECIFICATION

(11) **EP 0 929 591 B1**
(45) Date of publication and mention of the grant of the patent: **03.05.2000**
(21) Application number: 97945809.8
(22) Date of filing: 01.10.1997
(51) Int. Cl.: C08G 59/62, C09D 5/44

(54) **STABLE, ONE PACKAGE COATING COMPOSITIONS AND PROCESS FOR COATING**
STABILE, EINKOMPONENTENBESCHICHTUNGSZUSAMMENSETZUNGEN UND VERFAHREN FÜR BESCHICHTUNGSSTABILE EINKOMPONENTENBESCHICHTUNGSZUSAMMENSETZUNGEN UND VERFAHREN ZUR BESCHICHTUNG
COMPOSITIONS DE REVETEMENT STABLES ET EN UN SEUL EMBALLAGE, ET PROCEDES DE REVETEMENT

(30) Priority: 04.10.1996 US 726186
(43) Date of publication of application: 21.07.1999
(73) Proprietor: SHELL INTERNATIONALE RESEARCH MAATSCHAPPIJ B.V., 2596 HR Den Haag (NL)
(72) Inventor: HUNTER, Joseph, Michael, Houston, TX 77084 (US)
(86) International application number: EP9705551
(87) International publication number: WO9815588

(56) References cited:
- EP-A- 0 003 479
- EP-A- 0 167 029
- EP-A- 0 304 854
- US-A- 4 312 799

## Description

This invention is related to stable, one package coating compositions which are heat curable to form a thermoset plastic after application to a substrate, and more particularly to the composition and a process for coating a substrate by heating a coating composition made of a mixture of at least a polyamine compound and a Mannich base.

There has long been a desire to formulate a coating which can be applied to a substrate and thin films as a one package composition for ease of processing. U.S. Patent No. 4,399,268 describes the use of a two component coating composition made up of an epoxy resin and a specially formulated hardening agent. The hardening agent is made of a Mannich base made by reacting xylylene diamine with a phenol and formaldehyde. According to this patent, the crosslinked epoxy resins formed by combining the hardener with the epoxy resin are curable at low temperatures and are considered resistant to water, acids, and chemicals while retaining good surface gloss and elasticity.

In US patent No. 4,269,742, there is also described a coating composition which can harden tack free at low temperatures by reacting an epoxy resin with a particular hardening agent. In this case, the hardening agent is premanufactured by reacting a Mannich base with an amino amide or a polyamine at temperatures ranging from 100 °C to 180 °C to effect an amine exchange and a splitting off of secondary amine groups on the Mannich base. The hardening agents of these compositions contain an average of more than two reactive amine hydrogen atoms per molecule. Once the hardening agent is manufactured, it is reacted with an epoxy resin through the reactive amine hydrogen sites on the hardener to form a crosslinked epoxy resin coating curable at low temperatures.

Methods have been proposed for the cathodic electrodeposition of binders on substrates. For example, U.S. Patent No. 4,721,758 suggests electrocoating a mixture of an amine compound with a Mannich base, prepared by using not more than one equivalent of a secondary aliphatic amine with per equivalent of phenolic hydroxyl groups of a polyphenol. The mixture is rendered water dilutable by addition of a protonating acid, diluted to the appropriate concentration, after which the substrate is immersed in the electrocoat bath. Once electrocoated, the deposited film is cured at elevated temperatures. In this case, it was critical that the Mannich base contain only one amine molecule per phenol nucleus in order to reduce the basisity of the Mannich base by virtue of the hydrogen bonding between the phenolic hydroxyl group and the amine group in the ortho position. Along similar lines, U.S. 4,517,343 describes a cathodically electrodepositable surface coating binder made of a mixture of a Mannich base and an amide-amine compound, obtained by reacting a mono or dicarboxylic acid with a diamine having one primary and one secondary amino group per molecule. In order to prevent reaction of the carboxylic acid with the secondary amine group, it was essential that the secondary amine group carry a β-hydroxy alkyl group so that the carboxylic acid will preferentially react with the primary amine hydrogens. Also described is the reaction of 1 mole of a mono or dicarboxylic acid with 1 or 2 moles of the primary/ secondary diamine. Such reaction products, however, limit the number of amine crosslink sites which will react with the Mannich bases during heat and cure. This patent also describes, through other patents incorporated in its text, optionally reacting the Mannich bases at the phenolic hydroxyl site with epoxy resins. While such an approach builds up the molecular weight of the polymer network, there are no crosslink sites along that chain available for reaction either with the free primary/ secondary amine or with other alkyl-amines on the aromatic groups of the Mannich bases.

It would be desirable to formulate a coating composition which is not dependent upon and restricted to the presence or absence of a β-hydroxy alkyl group on the secondary amine nitrogen. It would also be desirable to have the flexibility of making a polyamine compound with a large number of secondary amine sites to build a highly crosslinked network while simultaneously building up the molecular weight of the polymer without the prior need to process the Mannich base itself with an epoxy resin to accomplish a build up in the molecular weight. A need also continues to exist for a one package, thermoset coating composition which can be easily processed and cured as a one package composition, which obviates the need for intense mixing, quick application and precise metering of the individual components at the application site, and which is transportable without risking unwanted curing and which can easily cured one coated as a thin film upon a substrate.

There is now provided a method for coating a substrate using a one package composition which is stored stable at room temperature and which can be cured upon application of heat. The method comprises applying a storage stable mixture made of at least a Mannich base and a polyamine compound to a substrate and curing the mixture on the substrate to form a cured coating by heating the mixture to effect exchange and liberation of amine groups from the Mannich base by the polyamine compound.

The mixture used and the method of coating the substrate comprises a Mannich base which is a reaction product of at least ai) a phenolic compound, aii) an aldehyde, and aiii) a secondary amine, such that each aromatic group of the Mannich base has at least two tertiary amino groups bonded through aldehyde residues to each aromatic ring of the phenolic compound. The polyamine compound comprises a reaction product of aiv) a primary amine, which optionally can contain secondary amine groups, and av) an epoxy compound having at least one 1,2-epoxy group(s) per molecule. The polyamine compound advantageously contains more than two active amine sites, defined as amine sites which will react, replace, and liberate the amine moieties on the Mannich bases under the curing conditions.

There are several advantages that the invention provides. First, when the polyamine compound is heated with the Mannich base, the tertiary amine groups on the Mannich base are replaced with the polyamine compound. Until application of heat, however, the composition is storage stable and does not react because the epoxy groups in the polyamine compound are largely masked and reacted out with amines. Contrary to other prior art processes described hereinbefore, the Mannich base is now reacted with the amine groups of the polyamines rather than with epoxide functionalities, thus enabling the composition to remain substantially unreactive at room temperature and used as a one-package composition.

A second advantage is that the coating composition is thermosetting and durable because the molecular weight of the polyamine compound is built up with epoxide compounds.

A further advantage lies in that the polyamine compound also possesses a large number of active amine sites for crosslinking with other Mannich bases, providing for a hard coating that cures rapidly. Further, since the Mannich base is at least disubstituted with alkyl-amine groups, the overall number of crosslink sites is increased.

It will be appreciated that the formulator is now provided with a much greater flexibility in controlling the hardness, flexibility, and cure rate of the coating by virtue of adjusting the number of active amine sites and the equivalent weight of the polyamine compound.

The storage stable compositions of the invention are made up of at least a blend of a Mannich base and a polyamine compound, which when mixed, remains unreactive and storage stable, even when the temperature reach as high as 65-70 °C. Thus, the compositions of the invention have a long shelf life. However, when applied to a substrate in thin films and heated to temperatures ranging from 110 °C to 180 °C, the composition reacts and cures to form a fully cured hard coating.

The preparation of Mannich bases is generally known and described in M. Tramitini, Synthesis 1973. Typically, the secondary amine and the phenolic compound are placed in a suitable vessel, and mixed thoroughly. The aldehyde is then added, either continuously over a period of time, or incrementally. Reaction is spontaneous and fairly exothermic. Provisions for temperature control are necessary. After completion of aldehyde addition, water that is formed as a by-product is removed by distillation. Chemical reaction during synthesis is believed to involve electrophilic addition of aldehyde to phenolic compound to form an alkanolated phenol intermediate. Further condensation with the secondary amine and elimination of water yields the Mannich reaction product.

The method for the preparation of the Mannich base is not particularly restricted. Other methods include fully or partially reacting the phenolic compound first with the aldehyde and subsequently adding the secondary amine; reacting the amine with the aldehyde, and then adding the phenolic compound to the resulting product; or simultaneously adding all three ingredients and allowing them to react.

The phenolic compound ai) can be any aromatic compound which contains at least one hydroxyl group attached to at least one aromatic ring. The aromatic ring(s) may have one or more substituents such as alkyl groups, as long as at least two of the 2, 4 or 6 positions, starting at the hydroxyl bearing carbon atom as the 1 position, is unsubstituted. A mononuclear phenolic compound can be represented by the formula: 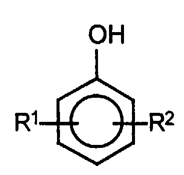 wherein R¹ and R² are independently hydrogens or hydrocarbyl groups having from 1 to 12 carbon atoms. R¹ and R² can be linear, branched or aromatic.

Examples of mononuclear phenols include phenol, ortho-, meta- or para-cresol, the isomeric xylenols, alkyl phenols such as n- or iso- butylphenol, octylphenol, nonylphenol and dodecylphenol. Phenol is preferred since it is capable of tri-substitution with the aldehyde-amine groups.

Suitable polyphenols are polynuclear phenols which have at least 2 phenol nuclei and carry in the molecule at least two hydrogen atoms ortho to different hydroxyl groups.

Examples of such polynuclear phenols are those of the general formula (II) : 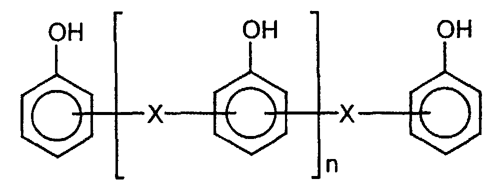 where the hydroxyl groups are in the ortho- or para-position with respect to X, and X is a straight-chain or branched, divalent aliphatic radical of 1 to 3 carbon atoms or a bridging group member of the formula >SO₂, >SO, >C=O, -O-, or -CH₂-NR-CH₂- (where R is an alkyl radical of 1 to 16 carbon atoms); and n is an integer from 0 to 100.

Examples of polynuclear phenols include resorcinol, hydroquinone, 4,4'-dioxydiphenyl, 4,4'-dioxydiphenylether, 4,4'-dioxydiphenylsulfone, 4,4'-dioxydiphenylmethane, and bisphenol A as well as the condensation products of phenol and formaldehyde known as novolacs. A preferred polyphenol according to formula II is bisphenol A. The polyphenols can also be produced in situ from monophenols and formaldehyde if, during the amino methylation, formaldehyde is employed in amounts greater than the amount equivalent to the amine used.

To the phenolic compound is reacted an aldehyde aii). Any suitable aliphatic, cycloaliphatic, or aromatic aldehyde may be used to make the Mannich base. Examples include formaldehyde, formaldehyde donors such as paraformaldehyde, acetaldehyde, proprionaldehyde, butylaldehyde, furfural, chloral, bromal, and benzaldehyde. Formaldehyde, paraformaldehyde, and butyraldehyde are the most preferred due to either their ready availability, or in the case of butyraldehyde, the lowering of the Mannich resin viscosity.

The amine used in the manufacture of the Mannich base is any secondary polyamine aiii). The Mannich base must have at least two tertiary amino groups bonded to the aromatic ring through the aldehyde residue in order to have a satisfactory crosslinking density and cure at a commercially satisfactory rate.

A preferable type of secondary amine aiii) is one which has a boiling point of less than 250 °C under a pressure of 1,000 mbar. The specific type of secondary amine chosen should have a boiling point less than the boiling point of the polyamine compound used in the curing process in order to volatize the liberated secondary amine compounds and drive the reaction toward the exchange of polyamine moieties for the tertiary amine moieties on the Mannich base.

Such secondary amines include secondary monoamines. Examples include dialkylamines, such as dimethylamine or diethylamine, dipropylamine, dibutylamine, methylethanolamine, ethylethanolamine, morpholine, piperidine, and methylpiperazine. Dialkylamines whose alkyl groups together contain 5 to 15 carbon atoms, for example ethylpropylamine, dipropylamine, diisopropylamine, dibutylamine, diisobutylamine, dipentylamine, dihexylamine or dicyclohexylamine, and mixtures of these dialkylamines, are also useful.

Secondary amines having more than one amino group are also useful so long as their boiling points are less than the boiling point of the polyamine compound which will ultimately replace the secondary amine compound attached to the Mannich base as a tertiary amine moiety.

The resulting Mannich base used in the invention will have at least two tertiary amino groups attached to each aromatic nucleus of the phenolic compound. In a preferable embodiment, the Mannich base will have three tertiary amino groups attached to each aromatic nucleus through the aldehyde residue in order to increase the crosslinking density and the resulting hardness of the coating, as well as the rate of cure.

The mole ratio of the secondary amine compound, regardless of the number of amine functionalities per compound, to phenolic hydroxyl groups is typically within the range of 2:1 to 10:1, more preferably from 2:1 to 4:1. The mole ratio of the secondary amine compound to the aldehyde is usually within the range of 1:1 to 10:1, preferably from 1.1:1 to 3:1. The amount of aldehyde should be at least 2 moles of aldehyde per phenolic hydroxyl group, preferably 3 moles per phenolic hydroxyl group.

The storage stable composition is a blend of at least the Mannich base and the polyamine compound. The polyamine compound is preferably liquid at room temperature so as to provide a commercially available, storage stable, one package coating composition. The polyamine is also preferably homogeneously miscible with the Mannich base to avoid the need for vigorous agitation or blending operations prior to application on a substrate, although some stirring or mixing is recommended no matter how miscible the two components are with each other, especially if other insoluble additives such as pigments or fillers are used.

The polyamine compound, upon heating the composition, will react with the Mannich base by an amine exchange with the tertiary amino groups bonded to the phenolic compound through the aldehyde residue, resulting in the liberation of the Mannich base tertiary amino groups and their replacement with the polyamine compound. The reaction scheme may be represented as follows, using for illustration purposes only, formaldehyde residues and dimethyl amine groups on the trisubstituted Mannich base and R groups on the polyamine compound which represent hydrocarbons or other amino groups: 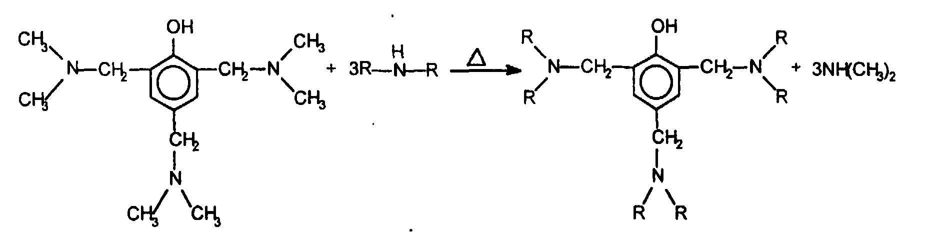 The crosslinking reaction may be represented as follows:

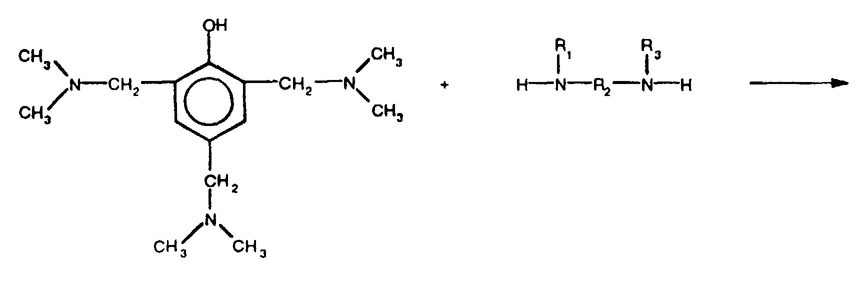

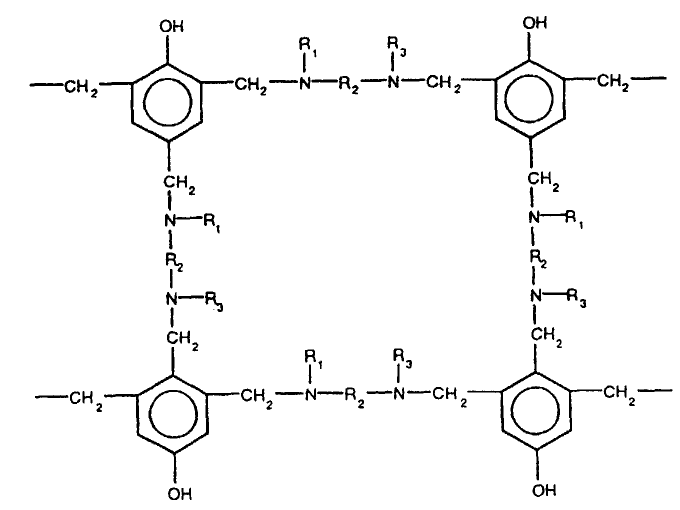

The amino groups in the final reaction product, based on the above reaction scheme, which are indirectly attached to the aromatic nucleus of the phenolic compound, are tertiary amino groups.

It is also possible that where the polyamine compound possesses a mixture of primary amine groups and secondary amine groups, the final reaction product may contain a mixture of secondary and predominantly tertiary amines. It is within the scope of the invention that the polyamine compound may contain one or more primary amine groups which can react by amine exchange either with two Mannich base compounds or double back onto the another tertiary amine attached to the same aromatic nucleus to form a hetero ring. Such primary amine groups are even desirable to cause the composition to cure quickly, but should not be present in such excessive amounts that the composition does not adequately crosslink or prematurely gel, thereby forming a coating which is not sufficiently durable and strong, or creates an undesirable reaction profile by reacting too quickly. Thus, in a preferred embodiment of the invention, the number of secondary amine groups in a polyamine compound exceeds the number of primary amino groups by a ratio of at least 4:1, respectively. In another embodiment, the polyamine compound is essentially free of primary amine groups, which means that there exists 10 mole % or less of or primary amines among the polyamine compounds.

The number of active amine groups in the polyamine compound used in the invention can vary widely. Active amine groups in the polyamine compound are amine groups which are capable of replacing the amine moieties on the Mannich bases under curing conditions. The polyamine compound can have as few as one secondary amine group and one primary amine group, or as few as two secondary amine groups where no primary amine groups are present on the polyamine compound. However, one of the advantages of the invention is the use of the polyamine compound which has a relatively high equivalent weight and a large number of active amine sites for the purpose of providing a large number of crosslink sites and a coating which is hard and durable.

Thus, the preferable embodiment is a polyamine compound having greater than two active secondary amine groups. Polyamine compounds having from greater than 2 and especially from 6-24 active secondary amine groups per molecule are quite suitable for use in the invention because they provide a large number of crosslink sites without causing an undesirable reaction profile.

In the case where two or more active secondary amine groups are present in the polyamine compound chain, one secondary amine group in the polyamine compound will attach across the aldehyde residue on the Mannich base during the exchange reaction, while the other secondary amine group(s) is available for the same type of reaction with other Mannich base compounds, thus providing a crosslinked network of aromatic nuclei to form a coating.

The percentage of acetylatable nitrogen groups of the coating is a measure of complete cure. If the percentage of titratable groups is high, adjustments to the amine compounds can be made, such as employing a polyamine compound with a higher number of secondary amine groups and selecting amine compounds which will increase the boiling point differential between the Mannich base amines and the polyamine compounds. In a preferred embodiment, the coating produced by the method of the invention has less than 1.0% of acetylatable nitrogen, and more preferably less than 0.5% of acetylatable nitrogen.

In another preferred embodiment, the polyamine compound contains at least one aromatic nucleus in order to increase the hardness of the coating. More preferably, the polyamine compound contains at least four aromatic nuclei per molecule. The aromatic rings may be supplied by the amine or the epoxy compound used in the manufacture of the polyamine compound.

Suitable equivalent weights of the polyamine compound based on the number of amine nitrogens ranges from 250 to 10,000, preferably from 500 to 5000. At equivalent weights below 250, the nitrogen content can unduly increase, leading to a reduction in the chemical resistance of the coating because the nitrogen groups tend to pick up environmental moisture. Also, having a high equivalent weight advantageously renders the coating durable. The specific equivalent weight of the polyamine compound used should be adjusted to provide an optimal balance between the polyamine compound viscosity and the viscosity of the composition during reaction at elevated temperature; the desired crosslinking density which will affect viscosity, toughness, and hardness of the coating; ease of manufacture; the weight amount of compound that must be used; the chemical resistance of the coating, and to provide a composition which, when applied to a substrate in films and heated, converts to a solid thermoset coating which is not tacky and completely cures. Polyamines which contain aromatic rings also assist in rendering a composition, which when applied to a substrate and heated, become non-tacky thermoset coatings whose hardness is increased.

The polyamine compound used in the invention is a reaction product of a primary amine compound, optionally containing secondary amine groups, with an epoxy compound having at least one 1.2-epoxy group(s) per molecule. The primary amine groups react preferentially with the 1.2-epoxy groups to form a polymer whose growth is controlled by the number of primary amine and epoxy groups available for reaction, the number of mono-epoxide compounds present, the reaction temperature, and/or the amount and timing of any chain terminating agents which may be added to the reaction mixture.

The primary amine used in the manufacture of the polyamine compound should have at least three active amine hydrogens, one for reaction with an epoxide, and the remaining two for the exchange reactions and crosslinking with the Mannich bases or for further reaction with more epoxides to grow the polymer chain. Thus, suitable primary amines in this case will have either at least two primary amine groups, or one primary amine group and at least one secondary amine group.

In other embodiments, it is possible to use amines having only one primary amine group and one or more groups with different functionalities reactive with the Mannich base amines or the hydroxyl group on the Mannich bases., resulting in a polyamine compound having only one secondary amine group and a non-amino reactive functionality. These different functionalities, however, would not react with other Mannich bases by amine exchange. Therefore, it is preferred that the polyamine compound have at least two secondary amine groups, made from the preferred primary amines.

Examples of primary amine compounds suitable for the manufacture of the polyamine compound included are the diamines optionally containing secondary amine groups such as ethylenediamine, 1,2- and 1,3-diaminopropane, 1,4-diaminobutane, neopentanediamine, 1-amino-3-aminomethyl-3,5,5-trimethyl-cyclohexane (isophorone diamine), 1,4(2)-diaminocyclohexane, diethylene triamine, triethylene tetramine, tetraethylene pentamine, 2,2,4- and/or 2,4,4-trimethylhexamethylenediamine, 1,6-hexanediamine, 1-ethyl-1,3-propanediamine, bis(3-aminopropyl) piperazine, N-aminoethylpiperazine, N,N-bis(3-aminopropyl)ethylenediamine, 2,4(6)-toluenediamine, 1,4-diamino-3,6-diethylcyclohexane, 1,2-diamino-4-ethylcyclohexane, 1,4-diamino-3,6-diethylcyclohexane, 1-cyclohexyl-3,4-diaminocyclohexane, norboranediamine, 4,4'-diaminodicyclohexylmethane, 4,4'-diaminodicyclohexylethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine or their hydrogenation products. The amines may be used alone or as mixtures.

The above described amines are reacted with an epoxy compound to increase the equivalent weight of the amines and the number of secondary amine groups in the polyamine compound, resulting in the polyamine compound used in the invention. Unlike prior processes which react an epoxy resin with a Mannich base across the Mannich base amine functionalities or across the phenolic groups, the process of the invention first reacts the epoxy compound with an amine compound to form a polyamine having a plurality of secondary amino groups, and the polyamine then displaces and liberates the Mannich base amino groups. The amine exchange reaction takes place largely due to the absence of secondary amine groups on the Mannich base which would otherwise be available for reaction with epoxy groups present on the polyamine, and the partial or full masking of the epoxy groups by reaction with the primary amines to form the polyamine compound.

The epoxy compound has at least one 1,2-epoxy group per molecule. Mixtures of epoxy compounds having one epoxy functionality and two or more epoxy groups are also suitable and preferred. Such mixtures may be simultaneously reacted with the polyamine compound or may be sequentially reacted with the polyamine compound. Depending on the types of amines and types of epoxy compounds used, their molar proportions, and their sequence of addition, the polyamine compounds can be terminated with one of more primary amine groups, one or more secondary amine groups, epoxide groups, non-reactive segments derived from monoepoxide monomers, or mixture of the foregoing on the same molecule or a mixture of the different reaction product species. For example, a mixture of primary diamines having some secondary amine groups, an epoxy compound having a nominal epoxide functionality of two, and a monoepoxy compound may be simultaneously reacted together, resulting in a mixture of polyamine species terminated with primary amine-primary amine, an epoxy-epoxy, an epoxy-primary amine, a hydrocarbon-hydrocarbon, a hydrocarbon-epoxy, and a hydrocarbon-primary amine. The monomer used in stoichiometric excess and/or the addition sequence will largely determine the predominant type of termination. However, each of the polyamine species would have at least one amine group available for an amine exchange reaction, whether it is a primary amine or a secondary amine group.

The epoxy compounds can be any reactive epoxy compound having at least one 1,2-epoxy equivalency (functionality). The epoxy compounds having two or more epoxy groups per molecule means that the nominal functionality is two or more. Generally epoxy resins contain a distribution of compounds with a varying number of 1,2-epoxy equivalency. The actual average functionality of these epoxy compounds is 1.5 or more. Any of the epoxy compounds employed in the manufacture of the polyamine can be saturated or unsaturated, linear or branched, aliphatic, cycloaliphatic, aromatic or heterocyclic, and may bear substituents which do not materially interfere with the amine exchange reaction. Such substituents can include bromine or fluorine. They may be monomeric or polymeric, liquid or solid, but are preferably liquid or a low melting solid at room temperature.

The epoxy compounds can be of the glycidyl ether type, prepared by reacting epichlorohydrin with a compound containing at least one aromatic hydroxyl group, carried out under alkaline reaction conditions. Examples of other epoxy resins suitable for use in the invention include diglycidyl ethers of dihydric compounds, epoxy novolacs and cycloaliphatic epoxies.

Preferred epoxy resins include, but are not limited to, any one of those represented by the formulas: 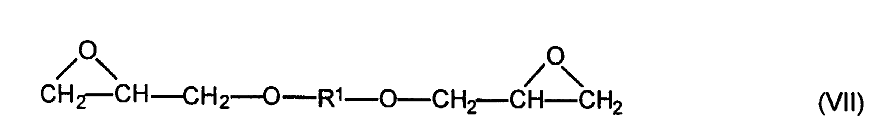 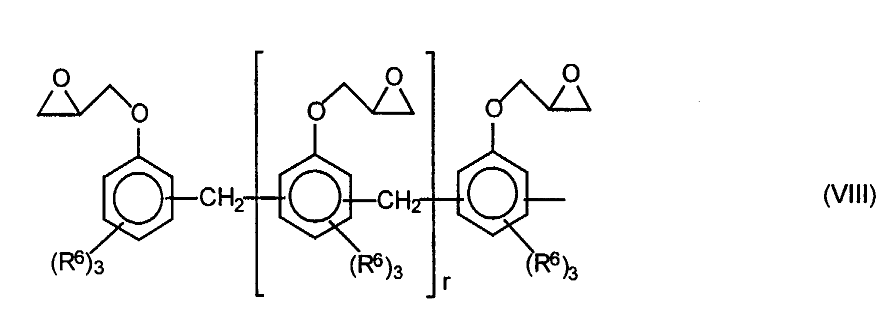 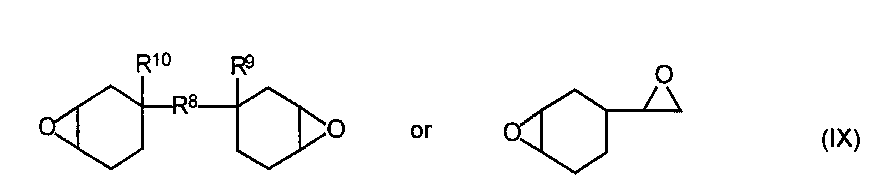 wherein r is a real number from about 0 to 6, R¹ is a divalent aliphatic group, a divalent cycloaliphatic group, a divalent aryl group, a divalent arylaliphatic group, or a divalent poly(alkyleneoxy)group, R⁶ is independently a hydrogen or a C₁-C₁₀ alkyl group, R⁸ is a divalent aliphatic group optionally containing ether or ester group(s) or together with R⁹ or R¹⁰ form a spiro ring optionally containing heteroatoms, and R⁹ and R¹⁰ are independently hydrogen or R⁹ or R¹⁰ together with R⁸ form a spiro ring optionally containing heteroatoms such as oxygen.

R¹ can be a divalent cycloaliphatic group having the formula: 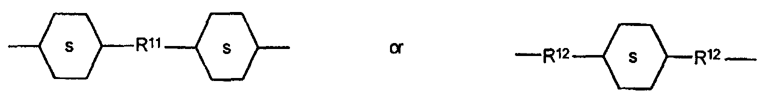 wherein R¹¹ and R¹² are each independently an alkylene group, or a divalent arylaliphatic group having the formula 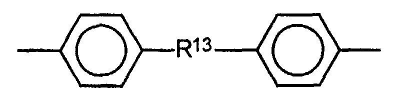 wherein R¹³ is an alkylene group.

For the epoxy compound having a nominal functionality of two or more, the epoxy compound is preferably a diglycidyl ether of a dihydric phenol, diglycidyl ether of a hydrogenated dihydric phenol, an aliphatic glycidyl ether, epoxy novolac or a cycloaliphatic epoxy.

Diglycidyl ethers of dihydric phenols can be produced, for example, by reacting an epihalohydrin with a dihydric phenol in the presence of an alkali. Examples of suitable dihydric phenols include: 2,2-bis(4-hydroxyphenyl) propane (bisphenol-A); 2,2-bis(4-hydroxy-3-tert-butylphenyl) propane; 1,1-bis(4-hydroxyphenyl) ethane; 1,1-bis(4-hydroxyphenyl) isobutane; bis(2-hydroxy-1-naphthyl) methane; 1,5-dihydroxynaphthalene; 1,1-bis(4-hydroxy-3-alkylphenyl) ethane. Suitable dihydric phenols can also be obtained from the reaction of phenol with aldehydes such as formaldehyde (bisphenol-F). Diglycidyl ethers of dihydric phenols includes advancement products of the above diglycidyl ethers of dihydric phenols with phenolic compounds such as bisphenol-A, such as those described in U.S. Patent Nos. 3,477,990 and 4,734,468.

Diglycidyl ethers of hydrogenated dihydric phenols can be produced, for example, by hydrogenation of dihydric phenols followed by glycidation with epihalohydrin in the presence of a Lewis acid catalyst and subsequent formation of the glycidyl ether by reaction with sodium hydroxide. Examples of suitable dihydric phenols are listed above.

Aliphatic glycidyl ethers can be produced, for example, by reacting an epihalohydrin with an aliphatic diol in the presence of a Lewis acid catalyst followed by conversion of the halohydrin intermediate to the glycidyl ether by reaction with sodium hydroxide. Examples of preferred aliphatic glycidyl ethers include those corresponding to the formulas: 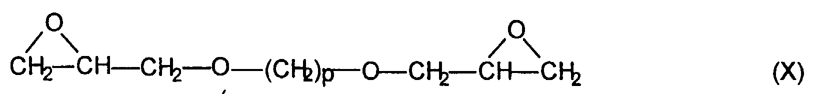 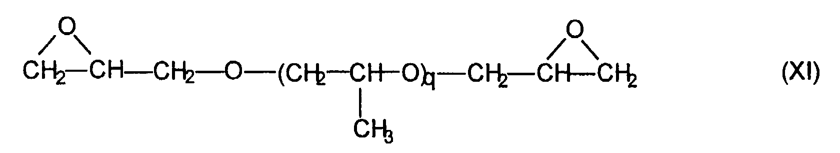 wherein p is an integer from 2 to 12, preferably from 2 to 6; and q is an integer from 4 to 24, preferably from 4 to 12.

Examples of suitable aliphatic glycidyl ethers include for example, diglycidyl ethers of 1,4 butanediol, neopentyl glycol, cyclohexane dimethanol, hexanediol, polypropylene glycol, and similar diols and glycols; and triglycidyl ethers of trimethylol ethane and trimethylol propane.

Epoxy novolacs can be produced by condensation of formaldehyde and a phenol followed by glycidation by epihalohydrin in the presence of an alkali. The phenol can be for example, phenol, cresol, nonylphenol and t-butylphenol. Examples of the preferred epoxy novolacs include those corresponding to the formula: 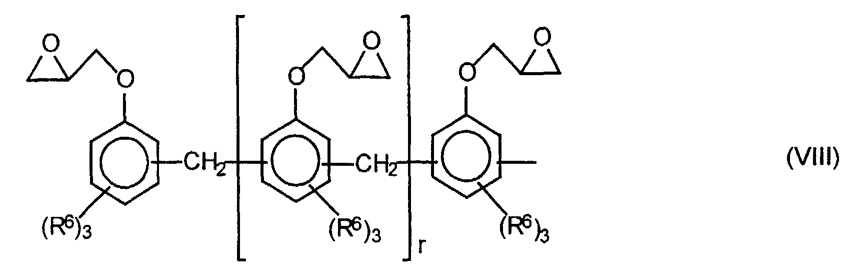 wherein R⁶ and r are defined above. Epoxy novolacs generally contain a distribution of compounds with a varying number of glycidated phenoxymethylene units, r. Generally, the quoted number of units is the number closest to the statistical average, and the peak of the distribution.

Cycloaliphatic epoxies can be produced by epoxidizing a cycloalkene-containing compound with greater than one olefinic bond with peracetic acid. Examples of the preferred cycloaliphatic epoxies include those corresponding to the formula: 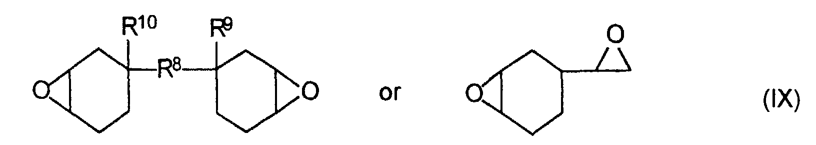 wherein R⁸, R⁹ and R¹⁰ are defined above. Examples of cycloaliphatic epoxies include, for example, 3,4-epoxycyclo-hexylmethyl-(3,4-epoxy)cyclohexane carboxylate, dicycloaliphatic diether diepoxy [2-(3,4-epoxy)cyclohexyl-5,5-spiro(3,4-epoxy)-cyclohexane-m-dioxane], bis(3,4-epoxycyclohexylmethyl)adipate, bis(3,4-epoxycyclohexyl)adipate and vinylcyclo-hexene dioxide [4-(1,2-epoxyethyl)-1,2-epoxycyclohexane]. Cycloaliphatic epoxies include compounds of the formulas:

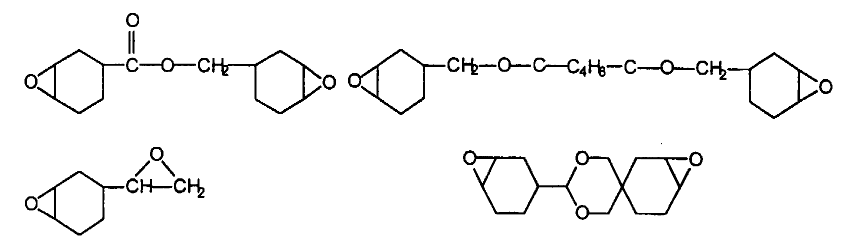

Commercial examples of the preferred epoxy compounds having a nominal functionality of two or more include, for example, EPON Resins DPL-862, 828, 826, 825, 1001, EPONEX Resin 1510, HELOXY Modifiers 107, 67, 68, and 32; all available from Shell Chemical Company and Union Carbide Epoxy Resins ERL-4221, -4289, -4299, -4234 and -4206. (EPON, EPONEX and HELOXY are trademarks).

Examples of monoepoxy compounds include the unsaturated epoxy hydrocarbons of butylene, cyclohexene, styrene oxide; epoxy ethers of monovalent alcohols such as methyl, ethyl, butyl, 2-ethylhexyl, dodecyl alcohol and others; epoxides of the alkylene oxide adducts of alcohols having at least 8 carbon atoms by the sequential addition of alkylene oxide to the corresponding alkanol (ROH), such as those marketed under the trademark NEODAL; epoxy ethers of monovalent phenols such as phenol, cresol, and other phenols substituted in the o- or p-positions with C₁-C₂₁ branched or unbranched alkyl, aralkyl, alkaryl, or alkoxy groups such as nonylphenol; glycidyl esters of unsaturated mono-carboxylic acids, epoxy esters of unsaturated alcohols or unsaturated carboxylic acids such as the glycidyl ester of neodecanoic acid; phenyl glycidyl ether; and acetals of glycidaldehyde.

The epoxy resin can be blended or mixed with the amine compounds and optionally the accelerator simultaneously or in sequential order at a temperature effective for reaction to produce a polyamine compound, typically from 40 °C to 180 °C. The molar ratio of the amine compounds to the epoxy compounds may be from 2 to 1 to 10 to 1, preferably from 4 to 1 to 6 to 1.

In another embodiment of the invention, the polyamine compounds are capped with a monoepoxide monomer to further drive the reaction between Mannich bases and polyamine compounds toward amine exchange reactions at the secondary amine sites on the polyamine compound. The presence of solely tertiary amino groups on the Mannich base largely ensures that the reaction between the polyamine compound and the Mannich base will be one of amine exchange.

To manufacture the polyamines of this embodiment, it is preferred to add small amounts of the polyepoxy compound to a stoichiometric excess of the amine compound so as to build the molecular weight of the amine, resulting in an intermediate terminated with the amine compounds, and subsequently reacting the monoepoxide compound onto the intermediate to end cap the polyamine. The resulting polyamine has alkyl, alkaryl, aralkyl, or alkoxy end groups which are substantially unreactive at the curing conditions towards the amine groups on the Mannich base or on other polyamine compounds. In this embodiment, the molar ratio of the polyfunctional epoxy to amine compounds to monoepoxy should be effective to cap all primary amine groups, and also to avoid termination with the polyfunctional epoxy compounds. For example, molar ratios of the epoxy compounds having two or more epoxy functionalities to amines having two primary amino groups to the monoepoxides may be at least 1:2:2, or 1:n:2(n-2)+2, where n is the variable which increases or decrease, is at least two, and represents the number of moles of amine compounds.

The polyamine compound is blended with the Mannich base optionally along with other additives and solvents to form a storage stable composition. The molar ratio of the polyamine compound to the Mannich base can range from 0.1:1 to less than 3:1, depending upon the number of active amine sites on the polyamine compound and whether the Mannich base is di or trisubstituted with alkyl-amine substituents. The composition is applied to the substrate and cured preferably at temperatures ranging from 110 ° to 180 °C to effect amine exchange and crosslinking reactions. The amine liberated from the Mannich base should have a boiling point lower than the boiling point of the polyamine compound and lower than the curing temperature to drive the reaction toward amine exchange and volatize the Mannich base amine. The polyamine compound should have a boiling point which is higher than the curing temperature to avoid volatizing the polyamine compound at curing temperatures.

The Mannich reaction can be carried out without a solvent provided that the reaction products are liquid at the reaction temperature. A solvent facilitates the handling and application of the composition in various environments. Suitable solvents include alcohols, ketones, esters, ethers of hydrocarbons. Examples of suitable solvents are butanol, methyl isobutyl ketone, toluene, ethylglycol acetate, xylene, benzylalcohol, phthalic acid esters of monohydric alcohols, e.g. n-butanol, amylalcohol, 2-ethylhexanol, nonanol, benzyl alcohol, gamma -butyrolactone, delta -valerolactone, epsilon -caprolactone, lower and higher molecular weight polyols, e.g. glycerol trimethylol-ethane or -propane, ethyleneglycol, and ethoxylated or propoxylated polyhydric alcohols, either individually or in admixture.

The storage stable composition of the invention may include other additives, such as fillers, elastomers, stabilizers, extenders, plasticizers, pigments, reinforcing agents, flow control agents and flame retardants depending on the application. Advantageously, the curable epoxy resin composition may be cured in the absence of catalyst compounds which accelerate the reaction between the Mannich base and the polyamine compound commonly known as accelerators. The storage stable composition is useful for coatings on substrates which can be heated.

For coating applications, the curable epoxy resin composition can also contain pigments of the conventional type such as iron oxides, lead oxides, strontium chromate, carbon black, titanium dioxide, talc, barium sulfate, phthalocyanine blue and green, cadmium red, iron blue, chromic green, lead silicate, silica, silicates and the like. Such pigments can be added to the polyamine curing agent component or the epoxy resin component prior to mixing them together. The type and amount of the pigment should be competitively reactive with the Mannich base-polyamine. Defoamers, tints, slip agents, thixotropes, etc., are common auxiliary components to most coatings and may be employed in the composition of the present invention.

The heat-curable coating composition can be applied to a substrate by brush, spray, or rollers. One of the advantages of the invention is that the composition is storage stable at ambient temperatures, easily spreadable on substrates, does not require any blending operations since the composition is in one-package, and is easy to cure by temperature control rather than by chemical auxiliaries.

The following examples illustrate an embodiment of the invention and are not intended to limit the scope of the invention.

### EXAMPLE

ANCAMINE K54 base is a Mannich base which is the reaction product of phenol, formaldehyde, and dimethylamine resulting in the phenolic rings of the Mannich base being at least disubstituted with tertiary amino groups bonded through aldehyde residues, commercially available from Air Products Inc.

HELOXY Modifier 62 is a commercial grade of ortho-cresyl glycidyl ether manufactured by Shell Chemical Company, that is produced by treatment of ortho-cresol with epichlorohydrin and sodium hydroxide. HELOXY Modifier is a thin liquid having a viscosity at 25 °C of 7 centipoise and an epoxide equivalent weight of 175 to 195.

DEN 438 is an epoxy resin that is commercially available from Dow Chemical Company. DEN 438 is produced by glycidation of a phenolic novolac based on condensation of the reaction product of phenol and formaldehyde. DEN 438 is a viscous material having a viscosity at 52 °C of 200 poise to 500 poise, and an epoxide equivalent weight of 176 to 181. DEN 438 contains, on the average, 3.6 epoxide groups per molecule.

EPI-CURE Curing Agent 3292 FX60 formerly known as EPI-CURE BX-60-820, is a polyamine compound containing approximately 40% of a mixture of xylene and n-butanol commercially available from Shell Chemical Company, and is the reaction product of triethylene tetramine, HELOXY Modifier 62, and DEN 438. The resulting polyamine compound typically has a nominal nitrogen content of 10 percent based on solids. It is prepared by first reacting DEN 438 with a substantial molar excess of triethylene tetramine. Typically, 10-12 moles of triethylene tetramine per mole of DEN 438 are employed in order to minimize formation of higher molecular weight components, and to prevent gelation. Excess unreacted triethylene tetramine is removed by distillation. This reaction product is diluted in a mixture of xylene and n-butanol, and further reacted with HELOXY Modifier 62 epoxy, commercially available from Shell Chemical Company. The ratio of HELOXY Modifier 62 epoxy to DEN 438 is typically from 0.6 to 1.4, preferably from 0.9 to about 1.1. In this way, the resultant polyamine compound contains a predominance, of secondary amine components. (ANCAMINE, HELOXY, EPICURE, DEN are trademarks).

In this example, a sample of the polyamine compound, EPI-CURE 3292 curing agent and a Mannich base were reacted on steel panel substrates and tested for their cure rates.

100 pbw of the polyamine compound and 38 pbw of ANCAMINE 54 were mixed in a beaker at 25 °C for 2 minutes. This mixture was identified as composition B. A control was prepared and identified as composition A by employing only 100 pbw of the polyamine compound.

A rolled phosphitized steel panel measuring 4 inches by 6 inches by 0.032 inches thick was dipped into composition B and baked for five minutes in an oven at 150 °C. The same procedure was repeated with additional steel panels dipped in composition B as well as composition A, and each baked at 5 minutes, 10 minutes, and 15 minutes at 150 °C.

After 5 minutes, both compositions A and B remained unset. At 10 minutes and 15 minutes, composition B had set to a gelled state, while composition A was unset at all three baking intervals.

The same procedure was repeated for both compositions A and B except that the oven temperature was lowered to 125 °C, and the time intervals were 15 minutes, 30 minutes, 45 minutes, and 1 hour. The panels containing the coating of composition A remained unset even after 1 hour at 125 °C. Composition B, at the lower temperature, remained unset at 15 minutes, 30 minutes, and 45 minutes, but had set at the 1 hour interval.

The results of this experiment indicate that coatings prepared with Mannich bases having three tertiary amine groups have a much better curing rate than coatings prepared with polyamine compounds made from adducts of multifunctional epoxy compounds and multifunctional amine compounds. Even at the lower temperatures of 125 °C, composition B, prepared with the Mannich base used in the invention had set after 1 hour.

In order to test for the hardness of the films and degree of cure, the three steel panel drawdowns of both compositions A and B were measured for pencil hardness according to ASTM D 3363-74 The panels measured were those which were baked at 5, 10, and 15 minutes intervals at 150 °C and those baked for 60 minutes at 125 °C. Composition A resulted in a film having a pencil hardness of 3B, 2B, B, and 2B, respectively. Composition B, on the other hand, resulted in a coating having a pencil hardness of B, H, 3H, and F, respectively. To test for the degree of cure, each of these 3 mill steel panel drawdowns were immersed in water for 1 hour at room temperature. After 1 hour, the panels were removed for inspection. All of the panels had lightened extensively except for those coated with composition B baked at the 10 minute or 15 minute intervals at 150 °C.

## Claims

1. A method of coating a substrate, comprising
a) applying a storage stable mixture comprising a Mannich base and a polyamine compound to the substrate , said Mannich base comprising the reaction product of :
ai) a phenolic compound,
aii) an aldehyde, and
aiii) a secondary amine,
each aromatic ring of said Mannich base being at least disubstituted with tertiary amino groups bonded through aldehyde residues; said polyamine compound comprising the reaction product of:
aiv) a primary amine, optionally containing secondary amine groups, and
av) an epoxy compound having at least one 1,2-epoxy group(s) per molecule; and
b) curing the mixture on the substrate to form a cured coating by heating the mixture to effect exchange and liberation of the tertiary amine groups from the Mannich base by the polyamine compound.

2. The method of claim 1, wherein the mixture is cured at temperatures ranging from 110 ° to 180 °C.

3. The method of claim 1, wherein the mole ratio of the secondary amine compound aiii) to phenolic hydroxyl groups on the phenolic compound ai) ranges from 2:1 to 4:1, the mole ratio of the secondary amine compound aiii) to the aldehyde aii) ranges from 1:1 to 3:1, and the amount of aldehyde aii) is at least 2 moles of aldehyde per phenolic hydroxyl group.

4. The method of claim 1, wherein the molar ratio of Mannich base to the polyamine compound is effective for complete substitution of the amine moieties from the Mannich base by the polyamine compound.

5. A storage stable composition comprising a blend of a Mannich base and a polyamine compound, said Mannich base comprising the reaction product of:
ai) a phenolic compound,
aii) an aldehyde, and
aiii) a secondary amine,
each aromatic ring of said Mannich base being disubstituted with at least two tertiary amino groups bonded through aldehyde residues to each aromatic ring of the phenolic compound; said polyamine compound comprising the reaction product of:
aiv) a primary amine, optionally containing secondary amine groups, and
av) an epoxy compound having at least one 1,2-epoxy group(s) per molecule.

6. The composition of claim 5, wherein the polyamine compound comprises the reaction product of the aiv) amine having 3 or more active primary amine hydrogens and the av) epoxy compound having an average of two or more 1,2-epoxy functionalities.

7. The composition of claim 5, wherein the aii) aldehyde comprises formaldehyde, paraformaldehyde or butyraldehyde and the ai) phenolic compound comprises phenol or bisphenol A.

8. Composition of claim 5, wherein each aromatic ring of the Mannich base is trisubstituted with amino groups bonded through aldehyde residues.

9. A cured coating on a substrate, said coating comprising the composition of claim 5.

10. A cured coating on a substrate according to claim 9, wherein the cured compound has less than 0.5% of acetylatable nitrogen groups.

## Patentansprüche

1. Verfahren zum Beschichten eines Substrats, umfassend
a) das Auftragen einer lagerbeständigen Mischung mit einem Gehalt an einer Mannich-Base und an einer Polyaminoverbindung auf das Substrat, wobei die Mannich-Base das Reaktionsprodukt aus:
ai) einer Phenolverbindung,
aii) einem Aldehyd und
aiii) einem sekundären Amin umfaßt,
wobei jeder aromatische Ring der Mannich-Base wenigstens zweifach durch tertiäre Aminogruppen, die über Aldehydreste gebunden sind, substituiert ist;
wobei die Polyaminoverbindung das Reaktionsprodukt aus:
aiv) einem primären Amin, das gegebenenfalls sekundäre Aminogruppen enthält, und
av) einer Epoxyverbindung mit wenigstens einer 1,2-Epoxygruppe pro Molekül umfaßt; und
b) das Härten des Gemisches auf dem Substrat zur Ausbildung eines gehärteten Überzuges durch Erhitzen der Mischung zur Bewirkung eines Austausches und einer Freisetzung der tertiären Aminogruppen aus der Mannich-Base durch die Polyaminoverbindung.

2. Verfahren nach Anspruch 1, worin die Mischung bei Temperaturen im Bereich von 110 bis 180°C gehärtet wird.

3. Verfahren nach Anspruch 1, worin das Molverhältnis der sekundären Aminoverbindung aiii) zu den phenolischen Hydroxylgruppen an der Phenolverbindung ai) im Bereich von 2:1 bis 4:1 liegt, das Molverhältnis der sekundären Aminoverbindung aiii) zum Aldehyd aii) im Bereich von 1:1 bis 3:1 liegt und die Menge an Aldehyd aii) wenigstens 2 Mol Aldehyd pro phenolischer Hydroxylgruppe beträgt.

4. Verfahren nach Anspruch 1, worin das Molverhältnis von Mannich-Base zu Polyaminoverbindung für eine vollständige Substitution der Aminoreste aus der Mannich-Base durch die Polyaminoverbindung wirksam ist.

5. Lagerbeständige Zusammensetzung mit einem Gehalt an einer Mischung aus einer Mannich-Base und einer Polyaminoverbindung, wobei die Mannich-Base das Reaktionsprodukt aus:
ai) einer Phenolverbindung,
aii) einem Aldehyd und
aiii) einem sekundären Amin umfaßt,
wobei jeder aromatische Ring der Mannich-Base wenigstens zweifach durch tertiäre Aminogruppen, die über Aldehydreste an jeden aromatischen Ring der Phenolverbindung gebunden sind, substituiert ist;
wobei die Polyaminoverbindung das Reaktionsprodukt aus:
aiv) einem primären Amin, das gegebenenfalls sekundäre Aminogruppen enthält, und
av) einer Epoxyverbindung mit wenigstens einer 1,2-Epoxygruppe pro Molekül umfaßt.

6. Zusammensetzung nach Anspruch 5, worin die Polyaminoverbindung das Reaktionsprodukt aus dem Amin aiv) mit drei oder mehr aktiven primären Aminwasserstoffatomen und der Epoxyverbindung av) mit im Durchschnitt zwei oder mehr 1,2-Epoxyfunktionalitäten umfaßt.

7. Zusammensetzung nach Anspruch 5, worin der Aldehyd aii) Formaldehyd, Paraformaldehyd oder Butyraldehyd umfaßt und die Phenolverbindung ai) Phenol oder Bisphenol A umfaßt.

8. Zusammensetzung nach Anspruch 5, worin jeder aromatische Ring der Mannich-Base mit Aminogruppen trisubstituiert ist, die über Aldehydreste gebunden sind.

9. Gehärtete Beschichtung auf einem Substrat, welche Beschichtung die Zusammensetzung nach Anspruch 5 umfaßt.

10. Gehärtete Beschichtung auf einem Substrat nach Anspruch 9, worin die gehärtete Verbindung weniger als 0,5% an acetylierbaren Stickstoffgruppen aufweist.

## Revendications

1. Procédé de revêtement d'un substrat, comprenant :
a) l'application d'un mélange stable à la conservation comprenant une base de Mannich et un composé de polyamine sur le substrat, ladite base de Mannich comprenant le produit de réaction :
ai) d'un composé phénolique,
aii) d'un aldéhyde, et
aiii) d'une amine secondaire,
chaque noyau aromatique de la base de Mannich étant au moins disubstitué avec des groupes amino tertiaires reliés par des résidus aldéhydiques, ledit composé de polyamine comprenant le produit de réaction :
aiv) d'une amine primaire, contenant éventuellement des groupes amine secondaires, et
av) d'un composé époxy comportant au moins un ou des groupes 1,2-époxy par molécule; et
b) le durcissement du mélange sur le substrat pour former un revêtement durci par chauffage du mélange pour effectuer un échange et une libération des groupes amine tertiaires de la base de Mannich par le composé de polyamine.

2. Procédé suivant la revendication 1, dans lequel le mélange est durci à des températures allant de 110°C à 180°C.

3. Procédé suivant la revendication 1, dans lequel le rapport molaire du composé d'amine secondaire aiii) aux groupes hydroxyle phénoliques sur le composé phénolique ai) va de 2/1 à 4/1, le rapport molaire du composé d'amine secondaire aiii) à l'aldéhyde aii) va de 1/1 à 3/1 et la quantité d'aldéhyde aii) est d'au moins 2 moles d'aldéhyde par groupe hydroxyle phénolique.

4. Procédé suivant la revendication 1, dans lequel le rapport molaire de la base de Mannich au composé de polyamine est efficace pour compléter la substitution des fragments d'amine de la base de Mannich par le composé de polyamine.

5. Composition stable à la conservation comprenant un mélange d'une base de Mannich et d'un composé de polyamine, ladite base de Mannich comprenant le produit de réaction :
ai) d'un composé phénolique,
aii) d'un aldéhyde, et
aiii) d'une amine secondaire,
chaque noyau aromatique de la base de Mannich étant disubstitué avec au moins deux groupes amino tertiaires reliés par des résidus aldéhydiques à chaque noyau aromatique du composé phénolique, ledit composé de polyamine comprenant le produit de réaction :
aiv) d'une amine primaire, contenant éventuellement des groupes amine secondaires, et
av) d'un composé époxy comportant au moins un ou des groupes 1,2-époxy par molécule.

6. Composition suivant la revendication 5, dans laquelle le composé de polyamine comprend le produit de réaction de l'amine aiv) comportant 3 hydrogènes d'amine primaire actifs ou plus et du composé époxy av) comportant une moyenne de deux fonctionnalités 1,2-époxy ou plus.

7. Composition suivant la revendication 5, dans laquelle l'aldéhyde aii) comprend du formaldéhyde, du paraformaldéhyde ou du butyraldéhyde et le composé phénolique ai) comprend du phénol ou du bisphénol A.

8. Composition suivant la revendication 5, dans laquelle chaque noyau aromatique de la base de Mannich est trisubstitué avec des groupes amino reliés par des résidus aldéhydiques.

9. Revêtement durci sur un substrat, ledit revêtement comprenant la composition de la revendication 5.

10. Revêtement durci sur un substrat suivant la revendication 9, dans lequel le composé durci contient moins de 0,5 % de groupes azote acétylables.
